(19) **Europäisches Patentamt European Patent Office Office européen des brevets**

(11) **EP 4 156 128 A1**

(12) **EUROPEAN PATENT APPLICATION**

(43) Date of publication:
**29.03.2023 Bulletin 2023/13**

(21) Application number: **22184951.6**

(22) Date of filing: **14.07.2022**

(51) International Patent Classification (IPC):
**G06V 20/59** (2022.01)    **B60K 28/02** (2006.01)
**B60W 30/09** (2012.01)    **B60W 50/12** (2012.01)
**G06V 40/10** (2022.01)    **G06V 40/20** (2022.01)
**G06V 10/44** (2022.01)

(52) Cooperative Patent Classification (CPC):
**G06V 20/597; B60K 28/02; B60W 30/09;**
**B60W 50/12; G06V 10/454; G06V 20/59;**
**G06V 40/10; G06V 40/107; G06V 40/23**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.09.2021 US 202117482824**

(71) Applicant: **Intel Corporation**
**Santa Clara, CA 95054 (US)**

(72) Inventors:
• **ALVAREZ, Ignacio J.**
  **Portland, OR 97229 (US)**
• **BUERKLE, Cornelius**
  **76137 Karlsruhe (DE)**
• **ELLI, Maria Soledad**
  **Hillsboro, OR 97124 (US)**

• **FELIP LEON, Javier**
  **Hillsboro, OR 97006 (US)**
• **GASSMANN, Bernd**
  **75334 Straubenhardt (DE)**
• **GONZALEZ AGUIRRE, David Israel**
  **Portland, OR 97209 (US)**
• **JARQUIN ARROYO, Julio Fernando**
  **76131 Karlsruhe (DE)**
• **OBORIL, Fabian**
  **75139 Karlsruhe (DE)**
• **PASCH, Frederik**
  **76137 Karlsruhe (DE)**
• **TUREK, Javier Sebastian**
  **Beaverton, OR 97006 (US)**

(74) Representative: **Viering, Jentschura & Partner mbB**
**Patent- und Rechtsanwälte**
**Am Brauhaus 8**
**01099 Dresden (DE)**

(54) **VEHICLE OCCUPANT MONITORING TECHNICAL FIELD**

(57)    System and techniques for vehicle occupant monitoring are described herein. Sensor data, that includes visual image data, is obtained from a sensor array of the vehicle. An object carried by the vehicle is detected from the visual image data. A safety event for the vehicle may be identified based on the object detection and an operational element of the vehicle is altered in response to detecting the safety event.

**EP 4 156 128 A1**

1400

1402
PROCESSOR
1424
INSTRUCTIONS

1404
MAIN MEMORY
1424
INSTRUCTIONS

1406
STATIC MEMORY
1424
INSTRUCTIONS

1408
MASS STORAGE
1424
INSTRUCTIONS

1422

1420
NETWORK INTERFACE DEVICE

1426
NETWORK

INTERLINK

1430

1410
DISPLAY DEVICE

1412
INPUT DEVICE

1414
UI NAVIGATION DEVICE

1416
SENSOR(S)

1418
SIGNAL GENERATION DEVICE

1428
OUTPUT CONTROLLER

**FIG. 14**

**Description**

**TECHNICAL FIELD**

Embodiments described herein generally relate to computer vision techniques in automobiles and more specifically to vehicle occupant monitoring.

**BACKGROUND**

Vehicle sensor systems are becoming more sophisticated. This trend has increased with advanced driver-assistance systems (ADAS) and autonomous driving vehicles. Generally, these systems include a range of sensors, such as cameras, RADAR, LIDAR, or ultrasonics to sense the environment through which the vehicles travels. The sensors enable the vehicle to determine how to avoid obstacles or navigate from one point to another. Generally, the sensors are arranged with different fields-of-view (FOVs) around the vehicle, providing longitudinal (e.g., fore and aft) and lateral (e.g., side to side) coverage surrounding the vehicle.

Vehicle occupant monitoring is generally less sophisticated that the ADAS and autonomous driving facilities mentioned above. Occupant monitoring may include such things as seatbelt detection-is an occupant wearing a seatbelt, distracted driver detection, or views of backseat occupants provided by cameras or mirrors to the driver.

**BRIEF DESCRIPTION OF THE DRAWINGS**

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

FIG. 1 is a block diagram of an example of an environment including a system for vehicle occupant monitoring, according to an embodiment.

FIG. 2 illustrates an example of safety margins added to vehicle navigation due to an object extending from a vehicle, according to an embodiment.

FIG. 3 illustrates example sensor positions to observe objects extending beyond a vehicle, according to an embodiment.

FIG. 4 illustrates an example flow for risk level evaluation, according to an embodiment.

FIG. 5 illustrates an example of an architecture for tracking lateral margins and controlling a driving policy, according to an embodiment.

FIG. 6 illustrates an example sensor placement within a vehicle, according to an embodiment.

FIG. 7 illustrates an example of a system to combine visual and audio data to observe occupants of a vehicle, according to an embodiment.

FIG. 8 illustrates an example of an audio processing pipeline, according to an embodiment.

FIG. 9. Illustrates an example of a visual classification system, according to an embodiment.

FIG. 10 illustrates an example of a combined audio and visual processing pipeline, according to an embodiment.

FIG. 11 illustrates an example of an audio classification system, according to an embodiment.

FIG. 12. Illustrates an example of a driver monitoring system, according to an embodiment.

FIG. 13 illustrates a flow diagram of an example of a method for vehicle occupant monitoring, according to an embodiment.

FIG. 14 is a block diagram illustrating an example of a machine upon which one or more embodiments may be implemented.

DETAILED DESCRIPTION

In most jurisdictions, the vehicle driver (e.g., operator) is responsible for the safe operation of the vehicle. Safe operation includes ensuring the safety of external entities (e.g., other vehicles, pedestrians, cyclists, animals, property, etc.) as well as the safety of the vehicle's occupants. Ensuring vehicle occupant safety may include monitoring and correcting the behavior of occupants, such as ensuring that seatbelts are used correctly, adjusting driving margins if an occupant puts a limb out of a window, or even monitoring themselves for distraction (e.g., eating or conversing on a mobile phone). Hence, the driver is generally responsible for continuously observing the behavior of all passengers including those on the backseats.

To facilitate this monitoring, mirrors have been used in a variety of configurations. For example, a mirror supplementing a standard rear-view mirror may be directed to observe a child in a child seat. However, mirrors often don't work well when children are located on the backseats, or even infants that travel backward-facing. In addition, children and infants often drop items (e.g., pacifier, toy, etc.) that may cause a distraction (e.g., an outburst or tantrum by the child) only ending when the item is returned, move in a way that the seatbelt is no longer properly located, or start crying or fall asleep in unhealthy positions.

Issues with existing monitoring techniques generally include additional distraction to the driver (e.g., having to look at additional sets of mirrors) and incomplete information (e.g., lack of situation detection and provision of corrective measures.

To address these issues, a sensor system may be integrated into the vehicle, the output of which may be used to detect and classify events relating to objects carried by the vehicle. Once safety events are detected, an operational element of the vehicle may be altered to help mitigate the safety event. For example, an-in-dash display may show a picture or symbol of a passenger improperly wearing a seatbelt along with a warning to the driver. If a safety event is classified as particularly dangerous (e.g., beyond a threshold), the operational element of the vehicle altered may cause slowing of the vehicle, or even pulling the vehicle to the side of the road to address the problem. Additionally, in various embodiments, the system may highlight dropped items for faster discovery and pickup or inform (e.g., warn) the driver about improper behavior or body position in a situation-dependent manner. In various embodiments, the system provides a direct video connection in the driver dashboard to avoid mirrors or aftermarket solutions, analyzes passenger behavior and can warn the driver in the dashboard about improper behavior-such as unhealthy sleep position, incorrect seatbelt positioning, etc., may enforce a vehicle risk-reducing maneuver-such as when the system detects a very critical situation like a removed seatbelt, or may flag dropped items by passengers to facilitate their retrieval, and thus minimize the driver distraction time.

Aside from passenger behavior that occurs inside of the vehicle, occupant behavior may implicate safety events outside of the vehicle as well. For example, if a passenger extends an arm or a leg out of a window, this additional extension of the vehicles footprint in the environment may mean that autonomous driving safety margins need to be altered to maintain safe lateral distances between the vehicle and other objects. The same situation may occur if, for example, oversized loads are affixed to the vehicle, again extending the vehicle's footprint. In these cases, an assessment may be made as to how permanent (e.g., for an entire trip or for minutes) the extension is likely to be. The safety margin parameters may be altered in response to this assessment. Generally the more temporary the extension, the smaller the change in the safety margin.

Cameras capturing still and video images generally provide a good sensor platform to enable the techniques described above. Microphones may be added to provide even greater context to the detect and classification of safety events. Further, microphones may be used to disambiguate situations (e.g., someone talking on a hands-free phone) or may be used as additional sensing (e.g., localizing where an event is occurring or identify where an item was dropped, etc.

The use of the devices, systems and techniques described herein provide a more sophisticated and accurate detection and classification of safety events. Further, the safety event may be mitigated without interfering as much with the driver compared to previous techniques. Thus, the driver may better fulfill the responsibility to safely operate a vehicle. Additional details and examples are provided below.

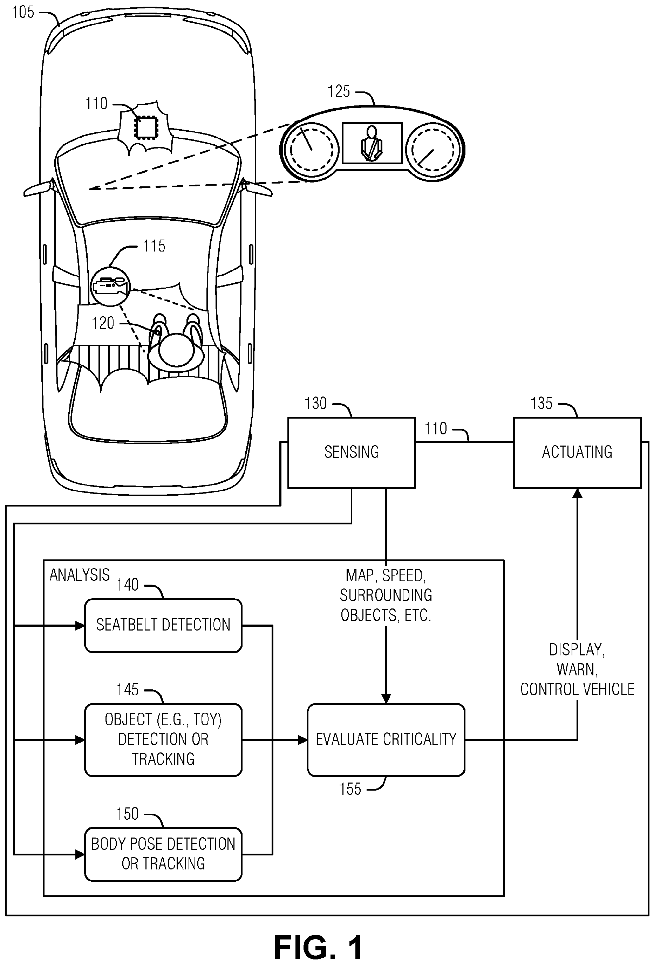

FIG. 1 is a block diagram of an example of an environment including a system for vehicle occupant monitoring, according to an embodiment. The system may include processing circuitry 110, a camera 115, and an in-dash display 125 housed in a vehicle 105.

As illustrated, the processing circuitry 110 is arranged to implement three elements: sensing (e.g., monitoring); analysis (e.g., to detect improper behavior, evaluate criticality, etc.), and actuation (e.g., inform or warn the driver, enforce a safe vehicle reaction such as slow down or stop, etc.). To this end, the processing circuitry 110 includes a sensor interface 130 to accept sensor data from one or more sensors, such as the camera 115 capturing a view of the passenger 120. In addition to one or more cameras covering various views of the vehicle cabin, the sensors may include motion sensors (e.g., ultrasonic, infrared, etc.), pressure sensors, or microphones. In the example illustrated, the sensors may also include positioning systems (e.g., global positioning system (GPS)), accelerometers, or devices, such as a vehicle electronic control unit (ECU), that provide traffic information, weather, or other conditions in which the vehicle 105 is operating.

The sensor interface 130 provides the sensor data to a variety of components that perform analysis on the sensor data. Discrete hardware embodied in the processing circuitry 110 to perform the analysis may include single-instruction-multiple data (SIMD) units like graphical processing units (GPUs), neuromorphic processors, field-programmable gate arrays (FPGAs), or other elements to implement the analysis.

This hardware works in conjunction with object detectors and classifiers running atop, or implemented directly by, the hardware. Such detectors and classifiers may be artificial neural networks (ANNs) trained to perform the respective tasks. Thus, for example, a convolutional neural network (CNN) may be trained for seatbelt position detection 140, another CNN for object detection or tracking 145, and another CNN for body pose detection or tracking 150. Other types of detectors or classifiers may be used to adjust the sensor data or provide additional classifications based on a variety of situations, such as identification of a crying child or shouting passenger. In general, ANN training is performed offline using existing samples of these situations.

Detection and classification may be considered a first-level assessment of the sensor data. Additional levels may perform additional classifications, such as combining multiple detections into a combined behavior. For example, a passenger has removed a seatbelt (e.g., one detection) and is in an incorrect pose (e.g., another detection) may be classified as "the passenger is attempting to hang out of a window."

The output of the first-level detectors may be varied. For example, seatbelt detection 140 may provide an output probability indicating how likely the seatbelt is positioned correctly. If there is high doubt (e.g., the probability output is low), the seatbelt detection 140 may flag the region within the image. The object detection or tracking 145 may provide an output image with the object highlighted, or the pose detection or tracking may provide a health or safety score of the pose. Additional examples outputs may include those in the following table.

| Component | Output |
|---|---|
| Seatbelt 140 | Annotated image with faulty seatbelt location |
| | Probability of improper seatbelt position |
| Passenger Pose 150 | Health/safety probability of current pose |
| | Pose description (e.g., ideal, lean to center, sleeping, ...) |
| Object Detection (Toy, Crying child, ... | Annotated image with highlighted location |

The output of these first-level components provided criticality evaluation circuitry 155 that estimates the criticality of the improper behavior. As illustrated, the criticality evaluation circuitry 155 may also accept additional information-such as vehicle speed, type of road (e.g., from map information), object detection outside of the vehicle 105, or other contextual data-and fuse (e.g., combine) it to compute a criticality score:

| Seatbelt | Pose | Speed | Type of road | Objects | Passenger | Criticality |
|---|---|---|---|---|---|---|
| Correct 100% | Ideal | X | X | X | X | Safe |
| Correct 90% | Extreme lean to center | > 50 km/h | X | X | X | Unsafe |
| Correct 70% | Extreme lean to center & Sleeping | > 130 km/h | X | X | X | Highly Unsafe |
| Misplaced 80% | Ideal | > 30 km/h; < 50km/h | Urban | Very close lead vehicle | Adult | Unsafe |
| Misplaced 80% | Ideal | > 30 km/h; < 50km/h | Urban | None | Adult | Acceptable |
| None 100% | Ideal | < 10 km/h | Private | X | Adult | Safe |
| None 100% | Ideal | < 10 km/h | Private | X | Baby | Highly Unsafe |

The criticality evaluation circuitry 155 may also be implemented as an ANN, support vector machine (SVM) or other classifier. Also, the illustrated class-based criticality score (e.g., safe, unsafe, highly unsafe) is one way of representing the output of the analysis. In an example, the output may be a floating-point number that represents a safety score between 0 and 100, for example.

The criticality evaluation circuitry 155 output is used to ascertain whether there is a safety event and informs how the processing circuitry 110 will act on the safety event. In an example, even if a safety event is detected, a low criticality score may prevent any action from being taken. The processing circuitry 110 acts on the safety event through the actuator interface 135 to drive the display 125, a speaker, or even change the movement of the vehicle 105. These outputs may be split into two stages: inform and act.

The inform stage receives the aggregated output from the analysis stage, which may be an annotated video stream and the estimated criticality. The processing circuitry 110 is arranged to provide direct feedback to the driver on the dashboard display 125 (or head-up-display) based on the analysis output. For example, an aggregated or annotated video stream containing highlighted annotations of possibly wrong seatbelt positions, detected toys, or crying children may be displayed. In an example, to avoid too much distraction for the driver, the object highlights may only appear when the object is out-of-reach from the passengers, for example, because they were dropped.

In an example, the criticality output is displayed to the driver. In an example, an escalation of notifications (e.g., an alarm, flashing graphic, etc.) may be provided based on the criticality score to increase the driver awareness. In this way, a progressive intrusion for the driver's attention occurs in proportion to the safety event and the length with which the unsafe situation has gone on.

In some cases, for example if the criticality of the safety event is very high (e.g., above a pre-defined threshold), the processing circuitry 110 is arranged to act to mitigate the safety event. Generally, the processing circuitry 110 is arranged to inform the driver, requesting that the driver mitigate the safety event, for example, within an adequate amount of time. This is similar to ADAS brake assist systems that first request the driver to react before performing vehicle deceleration. If action by people (e.g., the driver) does not mitigate the safety event, the processing circuitry 110 is arranged to activate available ADAS or autonomous driving functionality in the vehicle 105, to mitigate the safety event. Examples of such action may include a reasonable deceleration of the vehicle 105 to maintain a speed that is considered safe given the safety event, restricting acceleration, restricting a degree of turning, etc. There may be situations where other countermeasures are more appropriate, such as pulling the vehicle 105 to the side of the road or exiting a freeway. In an example, during these more involved maneuvers, the driver may be informed about the upcoming maneuver so as not be caught by surprise when the maneuver is performed by the vehicle 105. In an example, a user interface is provided to enable the driver to override a planned maneuver.

The operational parameters changed in the previous examples primarily addressed driving parameters of the vehicle 105, such as acceleration, braking, and steering. However, other operational parameters of the vehicle 105 may be modified, such as airbag deployment. For example, if an unhealthy sleep position is detected, the processing circuitry 110 may eb arranged to move the passenger through a seat adjustment (e.g., adjusting air bladders within the seat, raising or lowering the seat, etc.). In an example, airbags may be deactivated due to safety issues with the incorrect pose to further ensure occupant safety in the event of a crash.

Many of the examples above discuss monitoring rear seat passengers. However, the system may be applied to front seat passengers including the driver. Hence, if the driver does not behave appropriately, the system may inform the driver, and possible slow or stop the vehicle. In an example, pets, luggage, carried goods, or other cargo may be monitored for safety events as well. This may be useful in a number of situations, such as delivery van operations, or to prevent a dog from escaping out of a window.

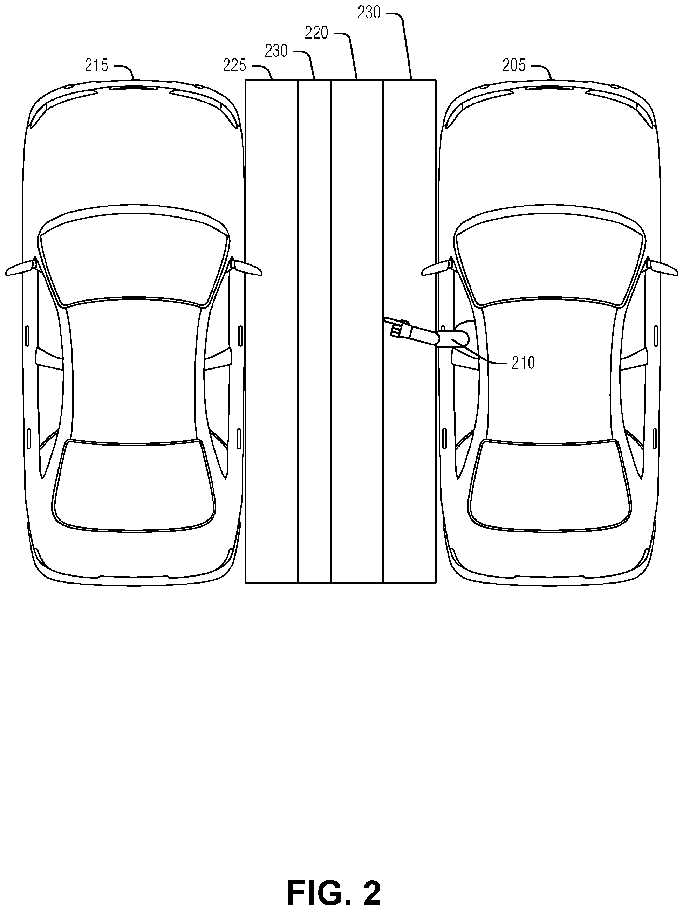

FIGS. 2-5 illustrate extensions of the concepts above to elements that increase the footprint of the vehicle 105. Such things may include limbs extending out of windows, or cargo extending from a roof, trunk, or bed of the vehicle. The following examples include additional details on sensor placement, safety event assessment, and mitigation, including changing lateral safety distances in ADAS and autonomous driving systems.

FIG. 2 illustrates an example of safety margins added to vehicle navigation due to an object extending from a vehicle, according to an embodiment. As illustrated, two vehicles (vehicle 215 and vehicle 205) are separated by safety margins. The traditional safety margins include the margin 225 specific to vehicle 215, a shared fluctuation margin 230, and the margin 220 for vehicle 205. Driving safety systems (DSS) generally describe similar margins. In a DSS, the margins 225 and 220 may be referred to by $\beta_{min}^{lat}$, or $\alpha_{lat,max}$, depending upon whether the respective vehicle is accelerating or braking. The margin 230 is an extent generally not found in DSS. As explained below, the margin 230 is a change to the operational parameter of the vehicle 205 to address the safety event of the driver extending a limb 210 outside of the window, increasing the vehicle's footprint in the environment.

When an occupant inside a travelling vehicle 205 decides to put a body part 210 outside the vehicle (e.g., window), the occupant may be endangering himself or other traffic participants in the surroundings. This behavior could be for fun, a personal necessity (e.g., smoking), or a local cultural commonality, such as signaling intentions (e.g., turning, stopping, etc.) with the driver's hand extended out the window. However, this behavior may pose a challenge to passenger safety in any vehicle with automation levels 1-5, and the surrounding vehicles. For example, extending an arm outside the window, can impact and modify the parameter describing the width of the vehicle. Such additional width should be considered and informed to safety systems, such as those implementing a DSS, to maintain proper safety lateral distances from other vehicles and objects. The additional width may also be useful to driver monitoring systems alerting the driver of the endangering behavior, for example, in cases of low automation levels.

In many cases this endangering behavior is temporary and dynamic. For example, the limb 210 may extend out of the window for a few seconds when signaling a turn. Further, the nature of the extension may vary based on the limb's movement or the vehicle's movement. Accordingly, a dynamic monitoring of the extension provides an effective adjustment to the operational parameters (e.g., safety margin 230) that is not generally achievable through simple configurations before beginning a trip.

In general, the system detects and measures dynamic movement within the lateral extents of the vehicle 205. The system evaluates a risk level for the extent and adjusts operating parameters based on the risk level. In an example, the system may inform an existing DSS or the like to enable a safety fallback measure if necessary. Accordingly, the system continuously measures the dynamic changes on the width of the vehicle and informs the driver or autonomous vehicle system about increases or decreases of a safety risk level to enable dynamic changes to vehicle operations. In an example, monitoring may detect external driver gestures for maneuvers and communicate intentions to ADAS or DSS systems. In an example, system may communicate the information with surrounding vehicles.

Safety systems in vehicles often include assumptions when accounting for lateral distances. This helps automated vehicles to keep safe distances from other objects or drivers to get timely warnings. However, as noted above, these lateral distances may change dynamically when passengers put different objects 210 out a window or the sides of the vehicle 205. For example, a safety model like aDSS defines a safety distance to be maintained between the ego vehicle (e.g., vehicle 205) and other road users (e.g., vehicle 215), but an object 210 out of the sides of the vehicle 205 may compromise such safety distance (e.g., margins 220-230) and endanger the vehicle 205, other road users (e.g., vehicle 215) in the surroundings, or the object 210 itself. Here, the object 210 may be passenger limbs or body, animals, flags, decorations, luggage, etc. In many cases, these objects are temporarily outside the lateral extents of the vehicle 205 from a few seconds to a whole ride. Moreover, objects may be moving out of the window dynamically.

A DSS lateral safe distance, $d_{min}^{lat}$ , definition between two vehicles $i$, $i$ = [1,2], with vehicle 1 to the left of vehicle 2, travelling with lateral speed $v_1$ and $v_2$, respectively, with assumed maximum lateral acceleration $\alpha_{lat,max}$ and minimum lateral deceleration, $\beta_{i,lat,min}$, is shown in the following equation:

$$\text{EQ(1)}$$

$$d_{min}^{lat} = \mu + \left[ \left( \frac{v_1 + v_{1,\rho}}{2} \right) \rho_1 \right.$$

$$+ \frac{v_{1,\rho}^2}{2\beta_{1,lat,min}} - \left( \left( \frac{v_2 + v_{2,\rho}}{2} \right) \rho_2 \right.$$

$$\left. \left. - \frac{v_{2,\rho}^2}{2\beta_{2,lat,min}} \right) \right]_+$$

Where $v_{1,\rho} = v_1 + \rho_1\alpha_{lat,max}$, $v_{2,\rho} = v_2 - \rho_2\alpha_{lat,max}$

But the applicability of equation EQ(1) on an automated vehicle or in an ADAS is highly dependent on the vehicle's lateral extents. In a vehicle implementing a safety model like a DSS, the lateral distance measured between the vehicle 205 and another road user, $d^{lat}$ (e.g., margin 220), should always be greater or equal than the one required by equation EQ(1), namely $d^{lat} \geq d_{min}^{lat}$ . But in cases where temporary and dynamic objects 210 expand on the lateral extents of the vehicle 205, extra margins (e.g., margin 230) should be established and incorporated into the safety model, namely: $d^{lat} \geq d_{min}^{lat} + margin_{object}$ .

To address this issue, the system described herein addresses combinations of temporary and dynamic objects to implement a Lateral Extent Monitoring System (LEMS). The LEMS architecture includes three components. The first component detects and measures temporary and dynamic objects 210 that extend on the lateral footprint of the vehicle 205. The second component performs a risk evaluation of the detected object 210 and communicates a risk level to a third component that takes an action or transmits information to other systems or vehicles.

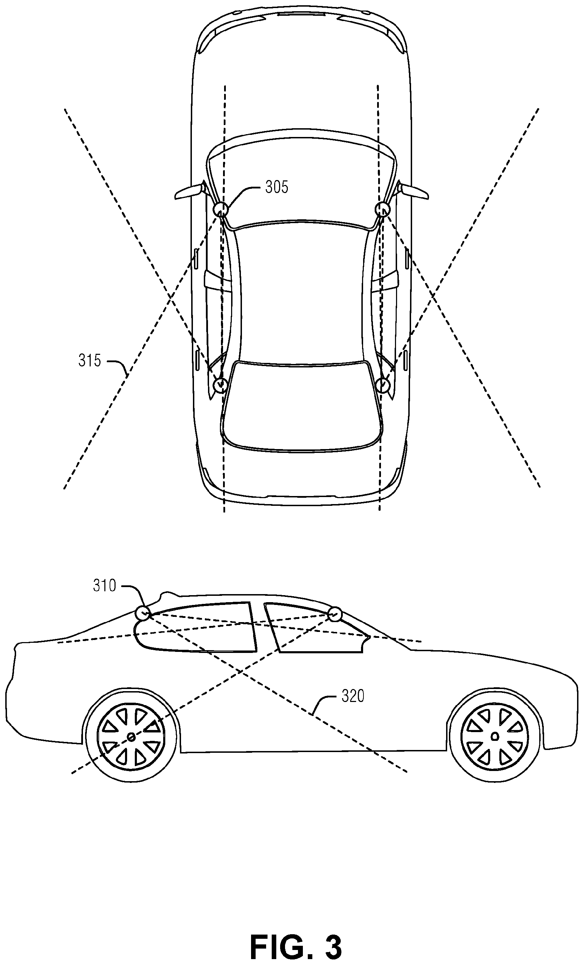

FIG. 3 illustrates example sensor positions to observe objects extending beyond a vehicle, according to an embodiment. These sensor positions may be collectively referred to as lateral surroundings perception. In general, the lateral surround perception includes sensors that capture the presence of objects and their sizes. In an example, sensors are usually located on both sides of the vehicle capturing the lateral regions, usually the windows area. As illustrated, sensor 305 is on the left side of the vehicle, with a FOV 315 looking backward to cover the windows, and sensor 310 is on the right side of the vehicle is a FOV 320 looking forward and down to capture the windows and doors of the vehicle.

Sensors may be of one or more types such as cameras (e.g., two dimensional visual light or infrared cameras), depth cameras (e.g., RGB-D), LIDAR, RADAR, or ultrasonic sensors among others. In an example, lateral surroundings perception may include an interface to receive or control existing sensors used for ADAS features, such as automated parking or lane keeping assistance if useful FOVs are available for the regions of interest.

The lateral surroundings and perception is arranged to detect objects impacting the lateral extents of the vehicle within the depth of the vehicle. In addition to detecting the presence of the object, the lateral surroundings and perception may be arranged to measure the size of the object. In an example, size measurements may be performed through a variety of image recognition and manipulation techniques.

In an example, lateral surrounding perception is arranged to detect driver gestures and inform other components of the vehicle. This may enable formalization of driving intentions by, for example, activating vehicle signal lights when a signaling gesture is made. In an example, the lateral surrounding perception may enter a low-power state when, for example, windows are closed.

As noted above, when an object is detected by the lateral surroundings perception component, the output may be transmitted to risk evaluation circuitry to establish whether there is a safety event. In the case of a safety event, mitigation may be attempted by changing one or more operational parameters of the vehicle.

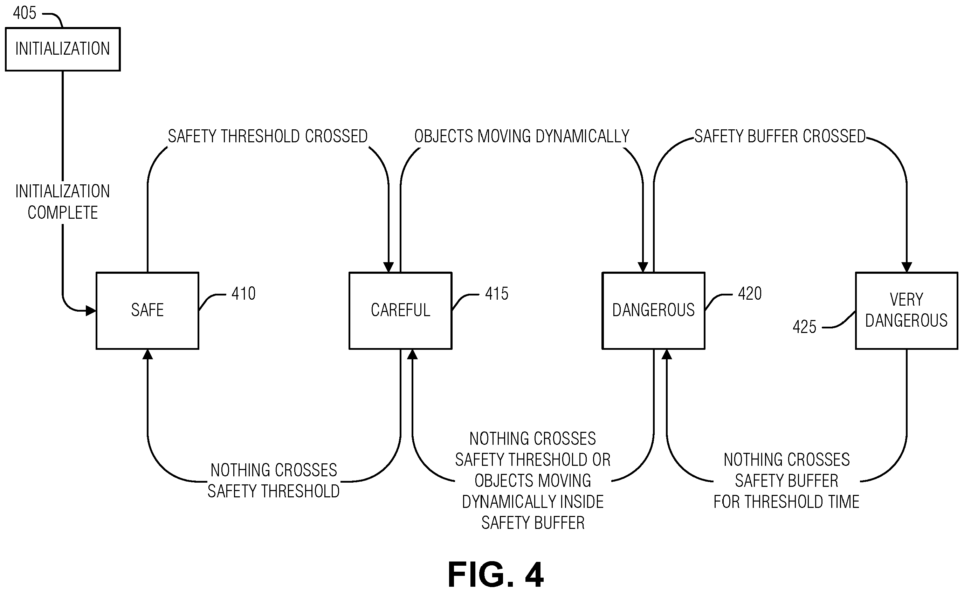

FIG. 4 illustrates an example flow for risk level evaluation, according to an embodiment. In this embodiment, the risk level circuitry receives measurements of detected objects and assigns a risk level. In an example, risk level states may include the illustrated safe state 410, careful state 415, dangerous state 420, or very dangerous state 425, although other demarcations or representations may be used. The states define the risk levels and may be assessed by the system in different ways.

The system starts at an initialization state 405. This initialization state 405 enables other components or systems to establish connections to support vehicle safety. Once the initialization state 405 is complete, the risk level circuitry moves to the safe state 410. In the safe state 410, the risk level circuitry assumes that either no objects are outside the vehicle or are within an acceptable distance to the lateral side. Here, an acceptable distance means that the object does not affect the vehicle's width, and therefore, the lateral distance to other vehicles (e.g., $margin_{object} \approx 0$). This may occur when the default width for safety systems is defined wider than the actual vehicle size, or simply because of a vehicle feature such as the lateral mirrors.

When at an object crosses a predefined threshold of lateral distance, the state changes from the safe state 410 to the careful state 415. The careful state 415 may communicate information and basic changes to other components, such as to update the lateral width in an ADAS. Once in the careful state 415, if the object remains steady, the risk level circuitry remains in the careful state 415 and continues to track the object. If the width shrinks (e.g., objects move back inside the vehicle) and nothing else crosses the threshold, the risk level circuitry returns to the safe state 410.

However, when the object moves (e.g., an arm moving back and forth or luggage waving in the wind), the state changes to the dangerous state 420. The dangerous state 420 increases the sensor sampling rate to enable faster object tracking. The dangerous state 420 may also enable or instruct additional safety measures to be taken by other systems in the vehicle. In an example, the dangerous state 420 defines an additional width buffer (e.g., margin 230 from FIG. 2).

If the dynamic behavior continues and the additional safety buffer is crossed, the risk level circuitry may continue to the very dangerous state 425. At the very dangerous state 425, safety measures (e.g., increasing lateral margins or alerting the driver) may not be enough, and preventive maneuvers may be employed. However, when the object crosses back behind the lateral thresholds and remains in the safety buffer for a period (e.g., a set number of seconds), the state transitions back to the dangerous state 420, then the careful state 415, and eventually the safe state 410 baring any additional object behaviors that increase the risk level state.

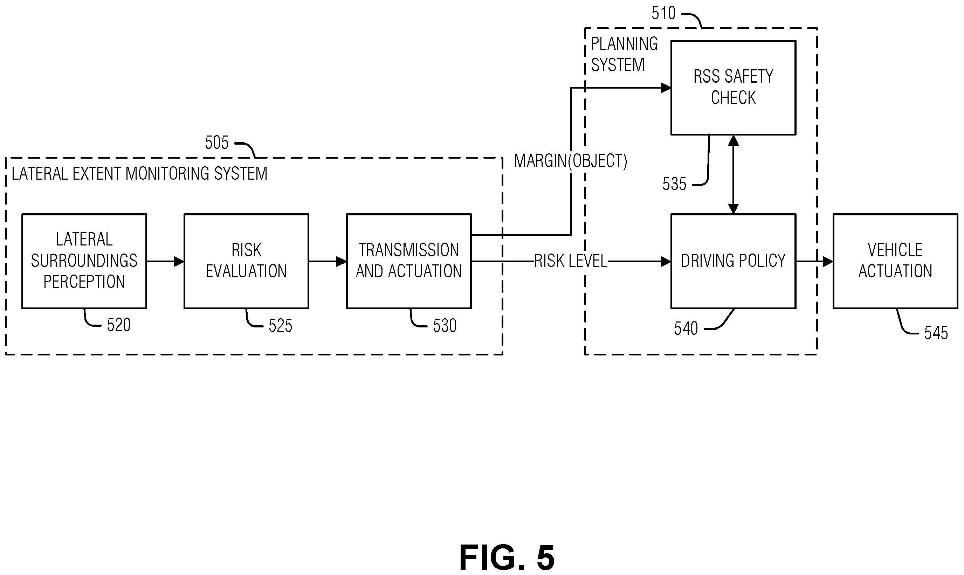

FIG. 5 illustrates an example of an architecture for tracking lateral margins and controlling a driving policy, according to an embodiment. The processing circuitry 110 of FIG. 1 may be arranged to implement the following components in the LEMS 505. The LEMS 505 interacts with the vehicle planning system 510 (e.g., an autonomous driving electronic control unit (ECU)) that in turn actuates controls on the vehicle via the vehicle actuation circuitry 545.

The LEMS 505 includes lateral surroundings perception circuitry 520, that provides object detection, measurement, or tracking to the risk level circuitry 525, which in turn provides risk state to the transmission and actuation circuitry 530.

The transmission and actuation circuitry 530 is arranged to receive the information about the risk level (e.g., state) from the risk level circuitry 525 and apply predefined actions to operational parameters of the vehicle based on the risk level. When the risk enters a careful state, for example, the transmission and actuation circuitry 530 it may actuate a warning or prompt a signal (e.g., to the safety component 535 or driving policy 540 of the planning system 510). When risk is at the careful level, the transmission and actuation circuity 530 may continuously updates the width of the vehicle and communicate the same to the safety component 535 in the vehicle (e.g., updates of dynamic lateral parameter for DSS safety checks). In an example, the transmission and actuation circuitry 530 is arranged to communicate the safety event to nearby vehicles through, for example, Vehicle-to-Vehicle (V2V) communication is available.

In an example, when the risk level is raised to dangerous, careful level measures are taken and additional safety signals (e.g., alarms) may be triggered to alert the passengers of the danger identified by the system. In an example, autonomous vehicle may change the driving behavior to a preventive mode to avoid any possible lateral collision. For example, for higher levels of automation, the driving policy 540 may be configured to change to the right-most lane enabling an exit from the main road or a stop if necessary.

In an example, when the risk reaches the very dangerous state, the transmission and actuation circuitry 530 may instruct the planning system 510. Or even the vehicle control 545 directly, to perform a minimum risk maneuver or an emergency maneuver that may, for example, safely stop the vehicle (e.g., with appropriate warning to the driver). In vehicles with ADAS features, these maneuvers may include generating a warning to the driver or limiting the lateral motion of the vehicle until the danger is resolved or until the danger (e.g., risk level state) it has decreased to a dangerous level. This enables the passengers or the driver to address the situation accordingly.

LEMS is useful in a variety of use cases, such as the robotaxi industry. A common happenstance may include identification of an object or body part coming out of the window of a vehicle. LEMS enables risk reduction for in-vehicle objects or people as well as nearby traffic participants. Accordingly, LEMS helps to reduce the risk of accidents or property damage due to careless passengers. Similarly, when used in conjunction with an ADAS system, LEMS enables the driver to focus on the road, giving warnings when necessary. In high levels of vehicle automation, LEMS may reduce risks and request that passengers address safety concerns. In cases in which the safety hazard is present from the beginning of a ride (e.g., a passenger transporting large objects such as a tall plant), LEMS may inform the passenger to mitigate the hazard before starting the trip. The same benefit may be enjoyed in vehicle such as forklifts, where the lateral extents inform the driver or the vehicle of safety margins based on the current load. Further, because LEMS tracks the objects, dynamic changes may be made to address these situations.

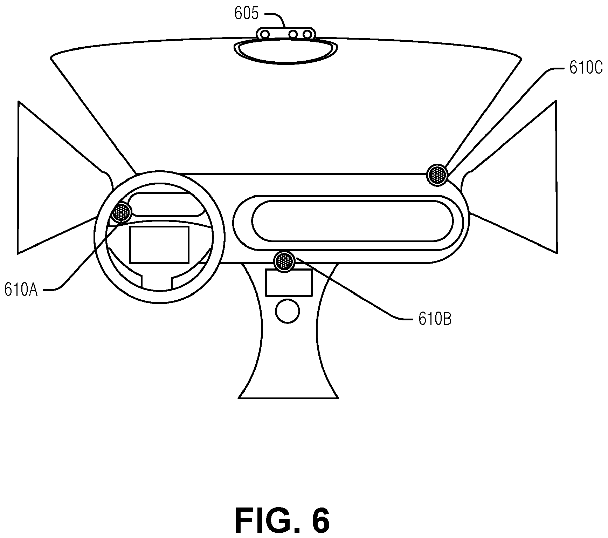

FIGS. 6-12 illustrate an extension to the concepts above to combine audio and image analysis to, for example, enhance occupant monitoring. The combined analysis enables better detection and classification of objects and behaviors.

FIG. 6 illustrates an example sensor placement within a vehicle, according to an embodiment. As illustrated, a camera 605 looking towards the vehicle cabin, and a microphone array 610, illustrated as including microphone 610A, microphone 610B, and microphone 610C. In general, Driver Monitoring systems (DMS)-which may include occupant monitoring-improve safety and user experience. DMS often employ a variety of sensors to analyze the occupant state and behavior. Here, the microphone array 610 provides an additional level of awareness to enhance occupant monitoring. For example, the microphone array may be used to classify the driver's actions, provide attention zones by using sound source localization, or act as a redundant source of information by describing of the current scene based on audio data.

The microphone array 610 may be combine with the camera 605-such as two-dimensional visual or infrared camera, or a three-dimensional (e.g., time-of-flight) camera-into an audio-visual pipeline to accurately and reliably, for example, perceive the driver's state, behavior, or interactions among other passengers. The system may also be used to monitor and log extraordinary events, such as like collisions, an emergency brake maneuver, a window crash, etc., that may later be used to adjust operating parameters of the vehicle based on the events preceding the extraordinary event.

In an example, the audio data is provided as an additional channel to visual data. The audio data is combined with visual data to generate more accurate descriptions of the occupant state or behavior. For example, driver state is commonly measured in terms of attention, fatigue, stress, drowsiness, engagement. Here, the traditional measures of driver attention may be augmented to include searching for objects, talking on the phone, talking with other passengers, yelling, yawning, etc.

As illustrated, the camera 605 and the microphone array 610 generate streams of video and audio data. Both data streams may be processed jointly or independently by the processing circuitry (e.g., processing circuitry 110 in FIG. 1) with the use of a CNN inference framework. For example. In an example, both audio and visual features generated by a CNN may be used to make a more accurate classification of the occupant state or behavior. In an example, the audio channel may be used independently to generate descriptions of a scene. These descriptions are stored in the form of events that may later be processed in conjunction with other sensors available to the vehicle.

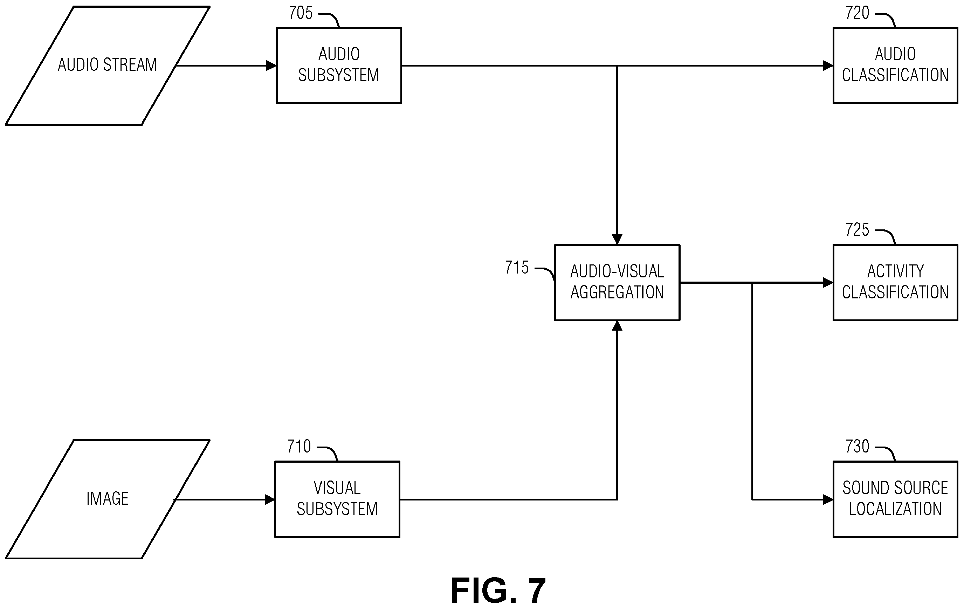

FIG. 7 illustrates an example of a system to combine visual and audio data to observe occupants of a vehicle, according to an embodiment. As illustrated, an audio stream is first processed by an audio subsystem 705 to produce audio features. Similarly, the video stream is processed by the visual subsystem 710 to produce visual features. The video features and audio features are aggregated by an aggregator 715 and provided to a classifier 725. In an example, the aggregated features may be provided to a localizer 730 to localize an object, for example. In an example, the audio features, may be provided to an audio classifier 720 to, for example, provide a transcript or description of an event.

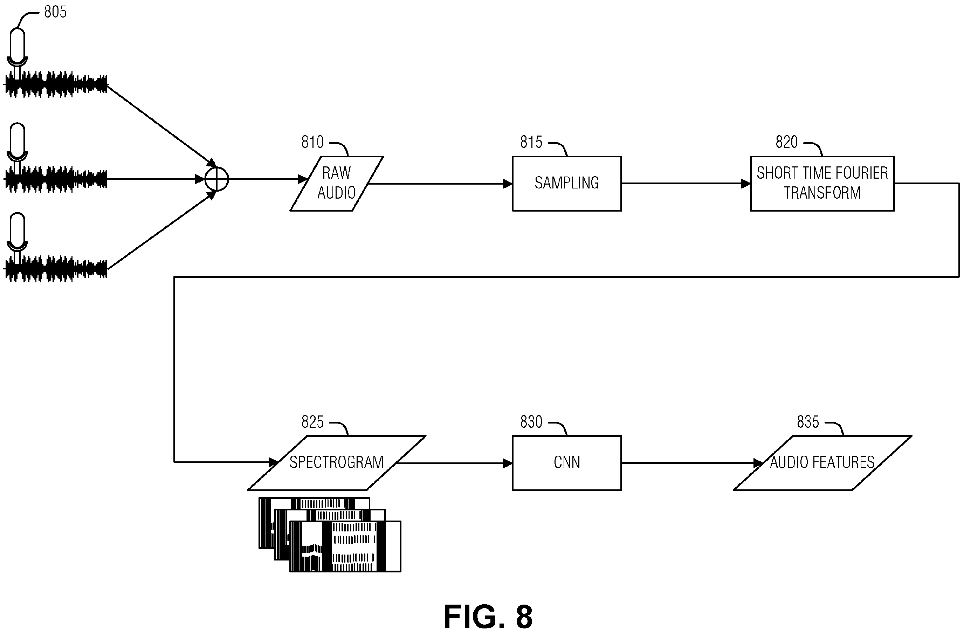

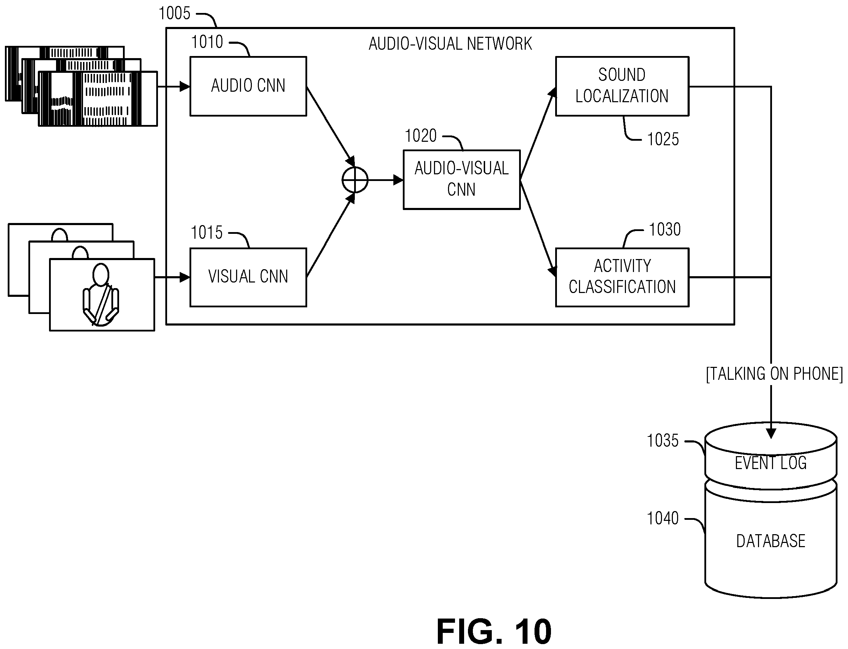

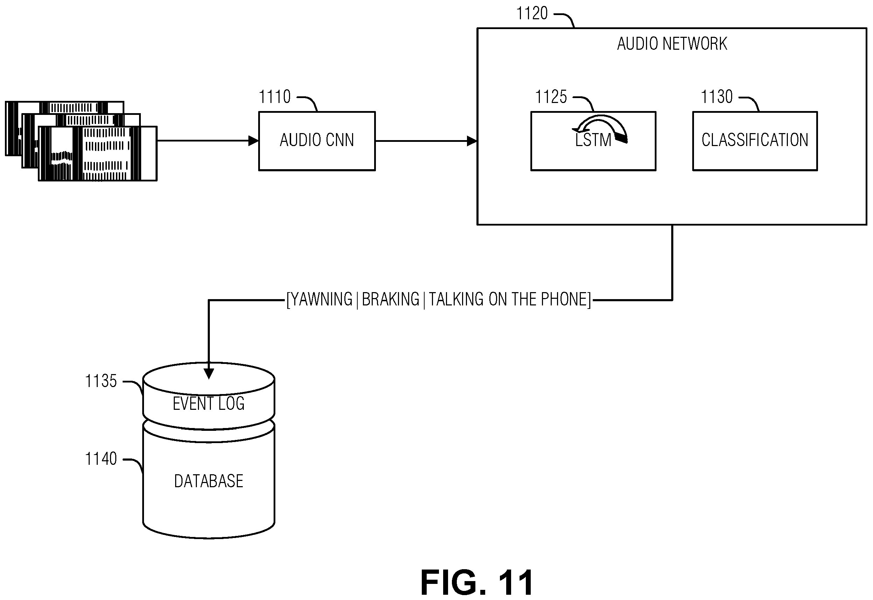

FIG. 8 illustrates an example of an audio processing pipeline, according to an embodiment. Sound is captured at the microphone array 805 to produce raw audio data 810. a sampling device 815 collects the raw audio data 810 over a time window before triggering the processing of the raw audio data 810. When the raw audio data 810 is ready for processing (e.g., at the trigger), the raw audio data 810 is aggregated and then converted to its spectral representation (e.g., spectrogram 825) with a Short Time Fourier Transformer (STFT) 820, this spectrogram 825 is then provided as input to a CNN 830. In an example, the CNN 830 includes a series (e.g., chain) of one-dimensional convolutions that generate audio features 835. The audio features 835 may then be used as input to the audio-visual network or as input to the audio network, such as those illustrated in FIG. 10 and FIG. 11 respectively.

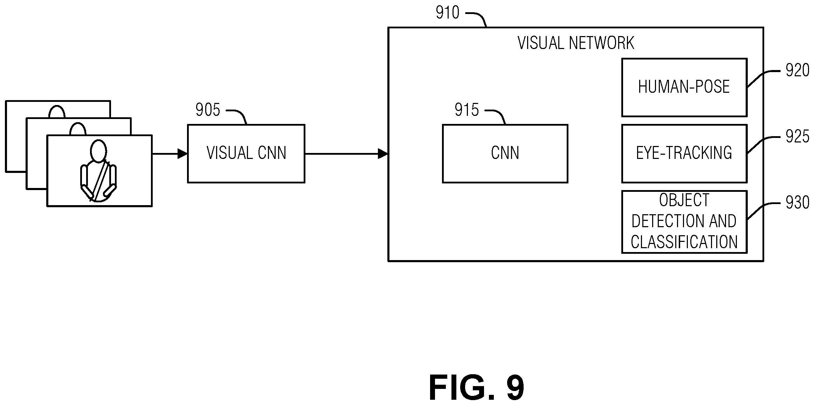

FIG. 9 illustrates an example of a visual classification system, according to an embodiment. The visual classification includes a visual CNN 905 to extract low-level features from image or video data. These features are provided to the visual network 910. The visual network includes a CNN 915 to extract higher-level features that then may be fed into a human pose classifier 920, eye tracking classifier 925, or object detector and classifier 930, among others. In an example, the outputs generated are aggregated with all the information provided by other sensor and detection components log the events. In an example, the outputs are used to influence the driver's state by feeding back information either visually, audibly, or haptically.

FIG. 10 illustrates an example of a combined audio and visual processing pipeline, according to an embodiment. The audio-visual pipeline, or audio-visual network 1005, fuses both audio 1010 and visual 1015 feature sets and provides them to a CNN 1020 to produce a single feature set. This feature set may then be provided to an activity classifier 1030 or a localizer 1025. Examples of activity classifications may include talking on the phone, talking with another passenger, interacting with vehicle controls, picking up an object, yawning, respiratory rate, or driver fatigue.

Outputs from the activity classifier 1030 or the localizer 1025 may be provided to other components (such as those described above to change operational parameters of a vehicle) stored in a database 1040. In an example, the database storage is in the form of events 1035 that may be retrieved later for reporting, training, or to be combine them with additional information from other sensors installed in the vehicle.

FIG. 11 illustrates an example of an audio classification system, according to an embodiment. Here, the audio network 1120 makes use of Long Short-Term Memory (LSTM) ANNs 1125 to account for past information. The output is saved in the form of events 1135 in a database 1140 that may be later used to generate an accurate description of what is happening in the vehicle.

As illustrated, audio features are provided by the audio processing pipeline 1110 to the audio network 1120. The audio features are processed with temporal neural networks, such as the LSTM ANN 1125 to produce a higher-level feature set. This higher level feature set is then processed by the classifier 1130 to calculate class probabilities for each audio sample. The audio is thus assigned a classification that best describes its contents. Examples of classifications for audio data are may include a person talking, a person yawning, a door opening, a door closing, engine ignition, braking, emergency braking, a dog barking, or an infant crying, among others.

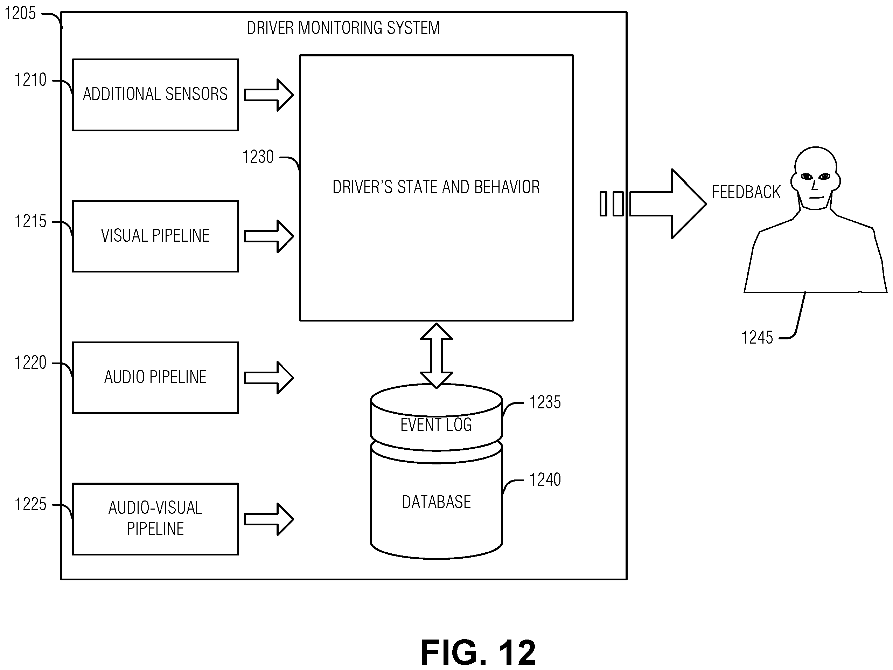

FIG. 12 illustrates an example of a driver monitoring system 1205, according to an embodiment. The elements described above may be integrated into a driver monitoring system 1205 that includes the audio-visual pipeline 1225, the audio pipeline 1220, the visual pipeline 1215, and other sensors 1210 as described above. These pipelines feed the driver state and behavior circuitry 1230 which integrates the classifications of the driver 1245, or other occupant, behavior. Then, feedback may be given to the driver 1245, logged in an event 1235 stored in a database 1240, or both.

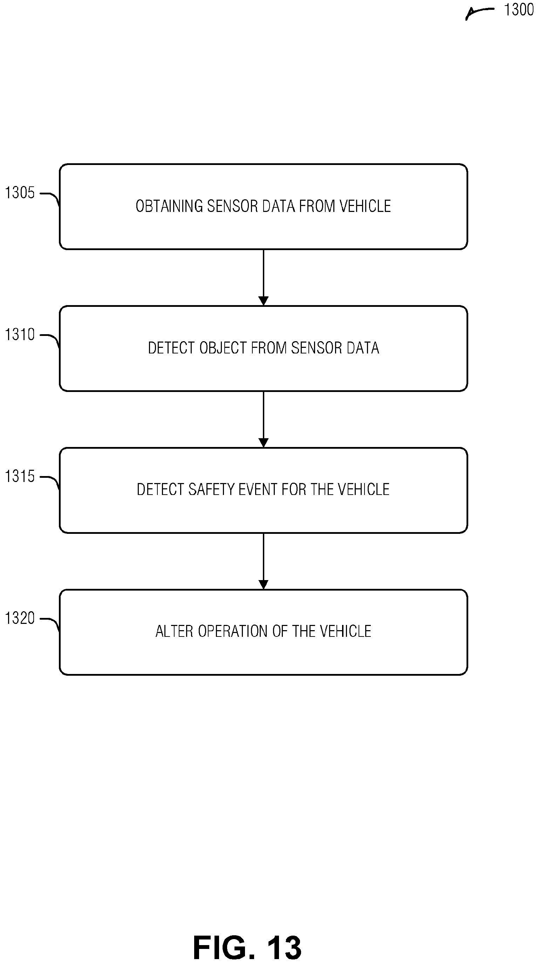

FIG. 13 illustrates a flow diagram of an example of a method 1300 for vehicle occupant monitoring, according to an embodiment. The operations of the method 1300 are performed by computer hardware, such as that described above or below (e.g., processing circuitry).

At operation 1305, sensor data is obtained from a sensor array of the vehicle. Here, the sensor data includes visual image data. In an example, the sensor array includes more than one camera to produce the visual image data. In an example, the cameras have a field-of-view (FOV) outside of the vehicle.

In an example, the sensor array includes more than one microphone.

At operation 1310, an object that is carried by the vehicle is detected from the visual image data. Thus, objects that are within the vehicle (e.g., people or luggage), objects extending from the vehicle (e.g., an arm extending out of a window), or objects affixed to the outside of the vehicle (e.g., furniture in the bed of a truck or tied to the roof of a car) are carried by the vehicle. In an example, the object is an object dropped by a passenger. In an example, the object is a seatbelt. In an example, the object is an occupant of the vehicle. In an example, the object protrudes from the vehicle.

In an example, detecting the object includes combining audio data from the more than one microphone and visual data from the more than one camera to produce a combined audio-visual input. The audio-visual input may then be evaluated in a convolutional neural network to localize the detected object in the vehicle.

At operation 1315, a safety event for the vehicle is detected based on the object detection. In an example, detecting the safety event includes obtaining operating conditions of the vehicle and classifying an event including the object as the safety event based on a combination of the operating conditions and the event. In an example, where the object is a seatbelt, the safety event is a misapplication of the seatbelt. In an example, where the object is a passenger (e.g., any occupant) of the vehicle, the safety event is a dangerous passenger pose.

At operation 1320, an operational element of the vehicle is altered in response to detecting the safety event. In an example, altering the operation element of the vehicle includes slowing the vehicle. In an example, altering the operation element of the vehicle includes navigating the vehicle to a safe location and stopping the vehicle.

In an example, where the object is one dropped by a passenger, altering the operation element of the vehicle includes providing a location of the fallen object.

In an example, where the object protrudes from the vehicle, altering the operation element of the vehicle includes modifying a minimum distance maintained by an automated driving system of the vehicle based on an extent to which the object protrudes from the vehicle. In an example, detecting the safety event (operation 1315) includes predicting a transience of the object and the minimum distance is modified by the predicted transience of the object.

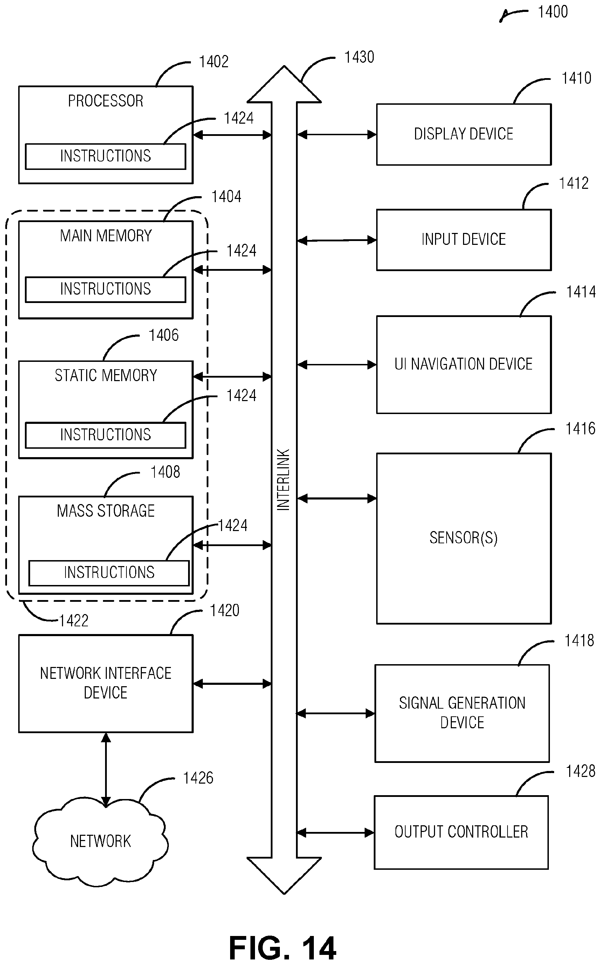

FIG. 14 illustrates a block diagram of an example machine 1400 upon which any one or more of the techniques (e.g., methodologies) discussed herein may perform. Examples, as described herein, may include, or may operate by, logic or a number of components, or mechanisms in the machine 1400. Circuitry (e.g., processing circuitry) is a collection of circuits implemented in tangible entities of the machine 1400 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a machine readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the machine 1400 follow.

In alternative embodiments, the machine 1400 may operate as a standalone device or may be connected (e.g., networked) to other machines. In a networked deployment, the machine 1400 may operate in the capacity of a server machine, a client machine, or both in server-client network environments. In an example, the machine 1400 may act as a peer machine in peer-to-peer (P2P) (or other distributed) network environment. The machine 1400 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine (e.g., computer system) 1400 may include a hardware processor 1402 (e.g., a central processing unit (CPU), a graphics processing unit (GPU), a hardware processor core, or any combination thereof), a main memory 1404, a static memory (e.g., memory or storage for firmware, microcode, a basic-input-output (BIOS), unified extensible firmware interface (UEFI), etc.) 1406, and mass storage 1408 (e.g., hard drives, tape drives, flash storage, or other block devices) some or all of which may communicate with each other via an interlink (e.g., bus) 1430. The machine 1400 may further include a display unit 1410, an alphanumeric input device 1412 (e.g., a keyboard), and a user interface (UI) navigation device 1414 (e.g., a mouse). In an example, the display unit 1410, input device 1412 and UI navigation device 1414 may be a touch screen display. The machine 1400 may additionally include a storage device (e.g., drive unit) 1408, a signal generation device 1418 (e.g., a speaker), a network interface device 1420, and one or more sensors 1416, such as a global positioning system (GPS) sensor, compass, accelerometer, or other sensor. The machine 1400 may include an output controller 1428, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 1402, the main memory 1404, the static memory 1406, or the mass storage 1408 may be, or include, a machine readable medium 1422 on which is stored one or more sets of data structures or instructions 1424 (e.g., software) embodying or utilized by any one or more of the techniques or functions described herein. The instructions 1424 may also reside, completely or at least partially, within any of registers of the processor 1402, the main memory 1404, the static memory 1406, or the mass storage 1408 during execution thereof by the machine 1400. In an example, one or any combination of the hardware processor 1402, the main memory 1404, the static memory 1406, or the mass storage 1408 may constitute the machine readable media 1422. While the machine readable medium 1422 is illustrated as a single medium, the term "machine readable medium" may include a single medium or multiple media (e.g., a centralized or distributed database, and/or associated caches and servers) configured to store the one or more instructions 1424.

The term "machine readable medium" may include any medium that is capable of storing, encoding, or carrying instructions for execution by the machine 1400 and that cause the machine 1400 to perform any one or more of the techniques of the present disclosure, or that is capable of storing, encoding or carrying data structures used by or associated with such instructions. Non-limiting machine readable medium examples may include solid-state memories, optical media, magnetic media, and signals (e.g., radio frequency signals, other photon based signals, sound signals, etc.). In an example, a non-transitory machine readable medium comprises a machine readable medium with a plurality of particles having invariant (e.g., rest) mass, and thus are compositions of matter. Accordingly, non-transitory machine-readable media are machine readable media that do not include transitory propagating signals. Specific examples of non-transitory machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

In an example, information stored or otherwise provided on the machine readable medium 1422 may be representative of the instructions 1424, such as instructions 1424 themselves or a format from which the instructions 1424 may be derived. This format from which the instructions 1424 may be derived may include source code, encoded instructions (e.g., in compressed or encrypted form), packaged instructions (e.g., split into multiple packages), or the like. The information representative of the instructions 1424 in the machine readable medium 1422 may be processed by processing circuitry into the instructions to implement any of the operations discussed herein. For example, deriving the instructions 1424 from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions 1424.

In an example, the derivation of the instructions 1424 may include assembly, compilation, or interpretation of the information (e.g., by the processing circuitry) to create the instructions 1424 from some intermediate or preprocessed format provided by the machine readable medium 1422. The information, when provided in multiple parts, may be combined, unpacked, and modified to create the instructions 1424. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable etc.) at a local machine, and executed by the local machine.

The instructions 1424 may be further transmitted or received over a communications network 1426 using a transmission medium via the network interface device 1420 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), LoRa/LoRaWAN, or satellite communication networks, mobile telephone networks (e.g., cellular networks such as those complying with 3G, 4G LTE/LTE-A, or 5G standards), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®, IEEE 802.15.4 family of standards, peer-to-peer (P2P) networks, among others. In an example, the network interface device 1420 may include one or more physical jacks (e.g., Ethernet, coaxial, or phone jacks) or one or more antennas to connect to the communications network 1426. In an example, the network interface device 1420 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 1400, and includes digital or analog communications signals or other intangible medium to facilitate communication of such software. A transmission medium is a machine readable medium.

Additional Notes & Examples

Example 1 is a device for vehicle occupant monitoring, the device comprising: an interface to obtain sensor data from a sensor array of the vehicle, the sensor data including visual image data; a memory including instructions;

and processing circuitry that, when in operation, is configured by the instructions to: detect an object carried by the vehicle from the visual image data; identify a safety event for the vehicle based on the object detection; and alter an operational element of the vehicle in response to detecting the safety event.

In Example 2, the subject matter of Example 1, wherein, to detect the safety event, the processing circuitry: obtains operating conditions of the vehicle; and classifies an event including the object as the safety event based on a combination of the operating conditions and the event.

In Example 3, the subject matter of any of Examples 1-2, wherein, to alter the operation element of the vehicle, the processing circuitry causes the vehicle to slow.

In Example 4, the subject matter of Example 3, wherein, to alter the operation element of the vehicle, the processing circuitry causes the vehicle to: navigate the vehicle to a safe location; and stop the vehicle.

In Example 5, the subject matter of any of Examples 1-4, wherein the object is an object dropped by a passenger.

In Example 6, the subject matter of Example 5, wherein, to alter the operation element of the vehicle, the processing circuitry provides a location of the dropped object.

In Example 7, the subject matter of any of Examples 1-6, wherein the object is a seatbelt.

In Example 8, the subject matter of Example 7, wherein the safety event is a misapplication of the seatbelt.

In Example 9, the subject matter of any of Examples 1-8, wherein the object is a passenger.

In Example 10, the subject matter of Example 9, wherein the safety event is a dangerous passenger pose.

In Example 11, the subject matter of any of Examples 1-10, wherein the sensor array includes multiple cameras to produce the visual image data.

In Example 12, the subject matter of Example 11, wherein the multiple cameras have a field-of-view (FOV) outside of the vehicle, and wherein the object protrudes from the vehicle.

In Example 13, the subject matter of Example 12, wherein, to alter the operational element of the vehicle, the processing circuitry modifies a minimum distance maintained by an automated driving system of the vehicle based on an extent to which the object protrudes from the vehicle.

In Example 14, the subject matter of Example 13, wherein, to detect the safety event, the processing circuitry predicts a transience of the object, and wherein the minimum distance is also modified by the predicted transience of the object.

In Example 15, the subject matter of any of Examples 1-14, wherein the sensor array includes more than one microphone.

In Example 16, the subject matter of Example 15, wherein, to detect the object, the processing circuitry: combines audio data from the more than one microphone and visual data from a camera to produce a combined audio-visual input; and evaluates the audio-visual input in a convolutional neural network to localize the detected object.

Example 17 is a method for vehicle occupant monitoring, the method comprising: obtaining sensor data from a sensor array of the vehicle, the sensor data including visual image data; detecting an object carried by the vehicle from the visual image data; identifying a safety event for the vehicle based on the object detection; and altering an operational element of the vehicle in response to detecting the safety event.

In Example 18, the subject matter of Example 17, wherein detecting the safety event includes: obtaining operating conditions of the vehicle; and classifying an event including the object as the safety event based on a combination of the operating conditions and the event.

In Example 19, the subject matter of any of Examples 17-18, wherein altering the operation element of the vehicle includes slowing the vehicle.

In Example 20, the subject matter of Example 19, wherein altering the operation element of the vehicle includes: navigating the vehicle to a safe location; and stopping the vehicle.

In Example 21, the subject matter of any of Examples 17-20, wherein the object is an object dropped by a passenger.

In Example 22, the subject matter of Example 21, wherein altering the operation element of the vehicle includes providing a location of the dropped object.

In Example 23, the subject matter of any of Examples 17-22, wherein the object is a seatbelt.

In Example 24, the subject matter of Example 23, wherein the safety event is a misapplication of the seatbelt.

In Example 25, the subject matter of any of Examples 17-24, wherein the object is a passenger.

In Example 26, the subject matter of Example 25, wherein the safety event is a dangerous passenger pose.

In Example 27, the subject matter of any of Examples 17-26, wherein the sensor array includes multiple cameras to produce the visual image data.

In Example 28, the subject matter of Example 27, wherein the multiple cameras have a field-of-view (FOV) outside of the vehicle, and wherein the object protrudes from the vehicle.

In Example 29, the subject matter of Example 28, wherein altering the operational element of the vehicle includes modifying a minimum distance maintained by an automated driving system of the vehicle based on an extent to which the object protrudes from the vehicle.

In Example 30, the subject matter of Example 29, wherein detecting the safety event includes predicting a transience of the object, and wherein the minimum distance is also modified by the predicted transience of the object.

In Example 31, the subject matter of any of Examples 17-30, wherein the sensor array includes more than one microphone.

In Example 32, the subject matter of Example 31, wherein detecting the object includes: combining audio data from the more than one microphone and visual data from a camera to produce a combined audio-visual input; and evaluating the audio-visual input in a convolutional neural network to localize the detected obj ect.

Example 33 is at least one machine readable medium including instructions for vehicle occupant monitoring, the instructions, when executed by processing circuitry, cause the processing circuitry to perform operations comprising: obtaining sensor data from a sensor array of the vehicle, the sensor data including visual image data; detecting an object carried by the vehicle from the visual image data; identifying a safety event for the vehicle based on the object detection; and altering an operational element of the vehicle in response to detecting the safety event.

In Example 34, the subject matter of Example 33, wherein detecting the safety event includes: obtaining operating conditions of the vehicle; and classifying an event including the object as the safety event based on a combination of the operating conditions and the event.

In Example 35, the subject matter of any of Examples 33-34, wherein altering the operation element of the vehicle includes slowing the vehicle.

In Example 36, the subject matter of Example 35, wherein altering the operation element of the vehicle includes: navigating the vehicle to a safe location; and stopping the vehicle.

In Example 37, the subject matter of any of Examples 33-36, wherein the object is an object dropped by a passenger.

In Example 38, the subject matter of Example 37, wherein altering the operation element of the vehicle includes providing a location of the dropped obj ect.

In Example 39, the subject matter of any of Examples 33-38, wherein the object is a seatbelt.

In Example 40, the subject matter of Example 39, wherein the safety event is a misapplication of the seatbelt.

In Example 41, the subject matter of any of Examples 33-40, wherein the object is a passenger.

In Example 42, the subject matter of Example 41, wherein the safety event is a dangerous passenger pose.

In Example 43, the subject matter of any of Examples 33-42, wherein the sensor array includes multiple cameras to produce the visual image data.

In Example 44, the subject matter of Example 43, wherein the multiple cameras have a field-of-view (FOV) outside of the vehicle, and wherein the object protrudes from the vehicle.

In Example 45, the subject matter of Example 44, wherein altering the operational element of the vehicle includes modifying a minimum distance maintained by an automated driving system of the vehicle based on an extent to which the object protrudes from the vehicle.

In Example 46, the subject matter of Example 45, wherein detecting the safety event includes predicting a transience of the object, and wherein the minimum distance is also modified by the predicted transience of the object.

In Example 47, the subject matter of any of Examples 33-46, wherein the sensor array includes more than one microphone.

In Example 48, the subject matter of Example 47, wherein detecting the object includes: combining audio data from the more than one microphone and visual data from a camera to produce a combined audio-visual input; and evaluating the audio-visual input in a convolutional neural network to localize the detected obj ect.

Example 49 is a system for vehicle occupant monitoring, the system comprising: means for obtaining sensor data from a sensor array of the vehicle, the sensor data including visual image data; means for detecting an object carried by the vehicle from the visual image data; means for identifying a safety event for the vehicle based on the object detection; and means for altering an operational element of the vehicle in response to detecting the safety event.

In Example 50, the subject matter of Example 49, wherein the detecting the safety event include: means for obtaining operating conditions of the vehicle; and means for classifying an event including the object as the safety event based on a combination of the operating conditions and the event.

In Example 51, the subject matter of any of Examples 49-50, wherein the means for altering the operation element of the vehicle include means for slowing the vehicle.

In Example 52, the subject matter of Example 51, wherein the means for altering the operation element of the vehicle include: means for navigating the vehicle to a safe location; and means for stopping the vehicle.

In Example 53, the subject matter of any of Examples 49-52, wherein the object is an object dropped by a passenger.

In Example 54, the subject matter of Example 53, wherein the means for altering the operation element of the vehicle include means for providing a location of the dropped object.

In Example 55, the subject matter of any of Examples 49-54, wherein the object is a seatbelt.

In Example 56, the subject matter of Example 55, wherein the safety event is a misapplication of the seatbelt.

In Example 57, the subject matter of any of Examples 49-56, wherein the object is a passenger.

In Example 58, the subject matter of Example 57, wherein the safety event is a dangerous passenger pose.

In Example 59, the subject matter of any of Examples 49-58, wherein the sensor array includes multiple cameras to produce the visual image data.

In Example 60, the subject matter of Example 59, wherein the multiple cameras have a field-of-view (FOV) outside of the vehicle, and wherein the object protrudes from the vehicle.

In Example 61, the subject matter of Example 60, wherein the means for altering the operational element of the vehicle include means for modifying a minimum distance maintained by an automated driving system of the vehicle based on an extent to which the object protrudes from the vehicle.

In Example 62, the subject matter of Example 61, wherein the means for detecting the safety event include means for predicting a transience of the object, and wherein the minimum distance is also modified by the predicted transience of the object.

In Example 63, the subject matter of any of Examples 49-62, wherein the sensor array includes more than one microphone.

In Example 64, the subject matter of Example 63, wherein the means for detecting the object include: means for combining audio data from the more than one microphone and visual data from a camera to produce a combined audio-visual input; and means for evaluating the audio-visual input in a convolutional neural network to localize the detected object.

Example 65 is at least one machine-readable medium including instructions that, when executed by processing circuitry, cause the processing circuitry to perform operations to implement of any of Examples 1-64.

Example 66 is an apparatus comprising means to implement of any of Examples 1-64.

Example 67 is a system to implement of any of Examples 1-64.

Example 68 is a method to implement of any of Examples 1-64.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the embodiments should be determined with reference to the appended claims, along with the full scope of equivalents to which such claims are entitled.

**Claims**

1. A method for vehicle occupant monitoring, the method comprising:

   obtaining sensor data from a sensor array of the vehicle, the sensor data including visual image data;
   detecting an object carried by the vehicle from the visual image data;
   identifying a safety event for the vehicle based on the object detection; and
   altering an operational element of the vehicle in response to detecting the safety event.

2. The method of claim 1, wherein detecting the safety event includes:

   obtaining operating conditions of the vehicle; and
   classifying an event including the object as the safety event based on a combination of the operating conditions and the event.

3. The method of any of claims 1-2, wherein altering the operation element of the vehicle includes slowing the vehicle.

4. The method of claim 3, wherein altering the operation element of the vehicle includes:

   navigating the vehicle to a safe location; and
   stopping the vehicle.

5. The method of any of claims 1-4, wherein the object is an object dropped by a passenger.

6. The method of claim 5, wherein altering the operation element of the vehicle includes providing a location of the dropped object.

7. The method of any of claims 1-6, wherein the object is a seatbelt.

8. The method of claim 7, wherein the safety event is a misapplication of the seatbelt.

9. The method of any of claims 1-8, wherein the object is a passenger.

10. The method of claim 9, wherein the safety event is a dangerous passenger pose.

11. The method of any of claims 1-10, wherein the sensor array includes multiple cameras to produce the visual image data.

12. The method of claim 11, wherein the multiple cameras have a field-of-view (FOV) outside of the vehicle, and wherein the object protrudes from the vehicle.

13. The method of claim 12, wherein altering the operational element of the vehicle includes modifying a minimum distance maintained by an automated driving system of the vehicle based on an extent to which the object protrudes from the vehicle.

14. At least one machine-readable medium including instructions that, when executed by processing circuitry, cause the processing circuitry to perform any method of claims 1-13.

15. A system comprising means to perform any method of claims 1-13.

**FIG. 1**

**FIG. 2**

FIG. 3

**FIG. 4**

EP 4 156 128 A1

**FIG. 5**

EP 4 156 128 A1

**FIG. 6**

**FIG. 7**

**FIG. 8**

EP 4 156 128 A1

**FIG. 9**

EP 4 156 128 A1

**FIG. 10**

EP 4 156 128 A1

FIG. 11

**FIG. 12**

EP 4 156 128 A1

— 1300

1305 — OBTAINING SENSOR DATA FROM VEHICLE

1310 — DETECT OBJECT FROM SENSOR DATA

1315 — DETECT SAFETY EVENT FOR THE VEHICLE

1320 — ALTER OPERATION OF THE VEHICLE

# FIG. 13

**FIG. 14**

Europäisches
Patentamt

European
Patent Office

Office européen
des brevets

# EUROPEAN SEARCH REPORT

Application Number

EP 22 18 4951

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/207358 A1 (KATZ ITAY [US] ET AL) 2 July 2020 (2020-07-02) * paragraphs [0017], [0019], [0023], [0040], [0042], [0043], [0051], [0061], [0074], [0110], [0139], [0176] * | 1-15 | INV. G06V20/59 B60K28/02 B60W30/09 B60W50/12 G06V40/10 G06V40/20 G06V10/44 |
| A | Senocak Arda ET AL: "Learning to Localize Sound Source in Visual Scenes Tae-Hyun Oh 2 Ming-Hsuan Yang 3 In So Kweon 1", , 10 March 2018 (2018-03-10), pages 1-9, XP055812546, California, USA Retrieved from the Internet: URL:https://arxiv.org/pdf/1803.03849.pdf [retrieved on 2021-06-10] * the whole document * | 6 | |

TECHNICAL FIELDS
SEARCHED (IPC)

B60K
B60W
G06V

The present search report has been drawn up for all claims

| Place of search | Date of completion of the search | Examiner |
|---|---|---|
| The Hague | 16 December 2022 | Lepetit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 4951

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2022

| Patent document cited in search report | Publication date | Patent family member(s) | Publication date |
|---|---|---|---|
| US 2020207358 A1 | 02-07-2020 | CN 113056390 A | 29-06-2021 |
| | | EP 3837137 A2 | 23-06-2021 |
| | | JP 2021530069 A | 04-11-2021 |
| | | US 2020207358 A1 | 02-07-2020 |
| | | US 2020216078 A1 | 09-07-2020 |
| | | US 2021269045 A1 | 02-09-2021 |
| | | WO 2020006154 A2 | 02-01-2020 |

EPO FORM P0459

For more details about this annex : see Official Journal of the European Patent Office, No. 12/82